**Europäisches Patentamt**

**European Patent Office**

**Office européen des brevets**

(11) Veröffentlichungsnummer: **0 224 654**
**B1**

(12) **EUROPÄISCHE PATENTSCHRIFT**

(45) Veröffentlichungstag der Patentschrift:
23.11.88

(21) Anmeldenummer: 86111726.5

(22) Anmeldetag: 25.08.86

(51) Int. Cl.⁴: **B 62 D 25/08**, B 62 D 35/02,
B 60 T 5/00

(54) **Kraftfahrzeug mit einem benachbart einer Fahrbahn verlaufenden bugendteil.**

(30) Priorität: 30.11.85 DE 3542376

(43) Veröffentlichungstag der Anmeldung:
10.06.87 Patentblatt 87/24

(45) Bekanntmachung des Hinweises auf die Patenterteilung:
23.11.88 Patentblatt 88/47

(84) Benannte Vertragsstaaten:
DE FR GB IT SE

(56) Entgegenhaltungen:
DE-A-3 107 692
DE-A-3 320 987
DE-A-3 525 627
FR-A-1 336 673

(73) Patentinhaber: **Dr.Ing.h.c. F. Porsche Aktiengesellschaft, Porschestrasse 42, D-7000 Stuttgart 40 (DE)**

(72) Erfinder: **Burst, Hermann, Dipl.- Ing., Telemannstrasse 10, D-7255 Rutesheim (DE)**

## Beschreibung

Die Erfindung bezieht sich auf ein Kraftfahrzeug mit einem benachbart einer Fahrbahn verlaufenden Bugendteil, das mit Luftleitkanälen verbunden ist, die zur Kühlung der Bremsen dienen.

Bei einer bekannten Anordnung der eingangs genannten Gattung (Fachbuch "Aerodynamik des Automobils" von Wolf-Heinrich Hucho, Vogel-Verlag, Seiten 246 und 247, Bild 6.28) weist das durch eine Schürze dargestellte Bugendteil stutzenförmig ausgebildete Kühllufteintrittsöffnungen auf, an die jeweils ein einen Luftleitkanal bildender Schlauch angeschlossen ist, dessen freies Ende auf die Bremse des benachbarten Rades gerichtet ist. Dieser Anordnung haftet der Nachteil an, daß die Montage des Luftleitkanals zeitaufwendig ist, da der Schlauch einerseits mit der Schürze und andererseits mit einem Fahrwerks- oder Aufbauteil verbunden ist. Außerdem sind zusätzliche Befestigungselemente (Schlauchschellen, Schrauben, Halter und dergleichen) zur Halterung des Schlauches erforderlich. Darüber hinaus ist dieses Kraftfahrzeug im Bugbereich zur Fahrbahn hin offen ausgebildet, wodurch an dem unter dem Fahrzeug hindurchströmenden Luftstrom Verwirbelungen auftreten, die den Luftwiderstandsbeiwert erhöhen.

Aufgabe der Erfindung ist es, an einem benachbart einer Fahrbahn verlaufenden Bugendteil eines Kraftfahrzeuges solche Vorkehrungen zu treffen, daß bei gutem cw-Wert des Fahrzeuges eine im Aufbau und in der Montage einfache Vorrichtung zur Kühlung der Bremsen geschaffen wird.

Erfindungsgemäß wird diese Aufgabe durch die kennzeichnenden Merkmale des Anspruchs 1 gelöst. Weitere, die Erfindung in vorteilhafter Weise ausgestaltende Merkmale beinhalten die Unteransprüche.

Die mit der Erfindung hauptsächlich erzielten Vorteile sind darin zu sehen, daß durch die einstückige Ausbildung vom Bugteil und Luftleitkanälen eine im Aufbau und in der Montage einfache Vorrichtung zur Kühlung der Bremsen geschaffen wird. Durch die Anordnung der Luftleitkanäle in einem eine Unterbodenverkleidung bildenden Abschnitt des Bugspoilers wird der Luftwiderstandsbeiwert des Fahrzeuges reduziert.

Ein Ausführungsbeispiel der Erfindung ist in der Zeichnung dargestellt und wird im folgenden näher erläutert.

Es zeigt

Fig. 1    eine Teilseitenansicht eines Personenwagens,
Fig. 2    eine Ansicht in Pfeilrichtung R auf ein benachbart einer Fahrbahn verlaufendes Bugendteil,

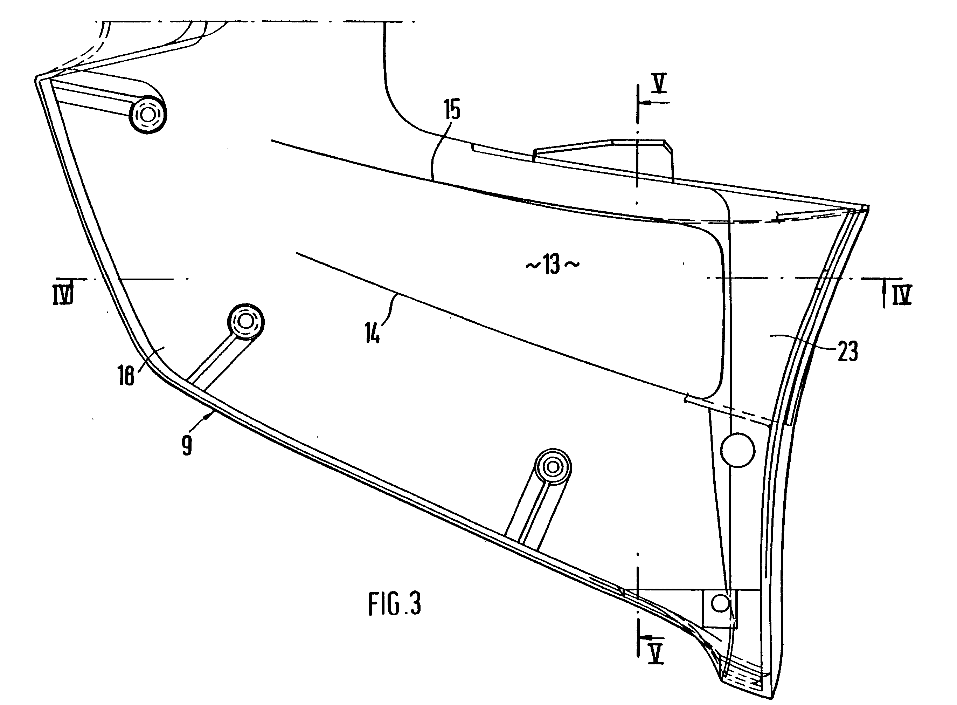

Fig. 3    eine Einzelheit X der Fig. 2 in größerem Maßstab,
Fig. 4    einen Schnitt nach der Linie IV-IV der Fig. 3,
Fig. 5    einen Schnitt nach der Linie V-V der Fig. 3,
Fig. 6    einen Schnitt nach der Linie VI-VI der Fig. 2 in größerem Maßstab,
Fig. 7    eine perspektivische Teilansicht auf das Bugendteil.

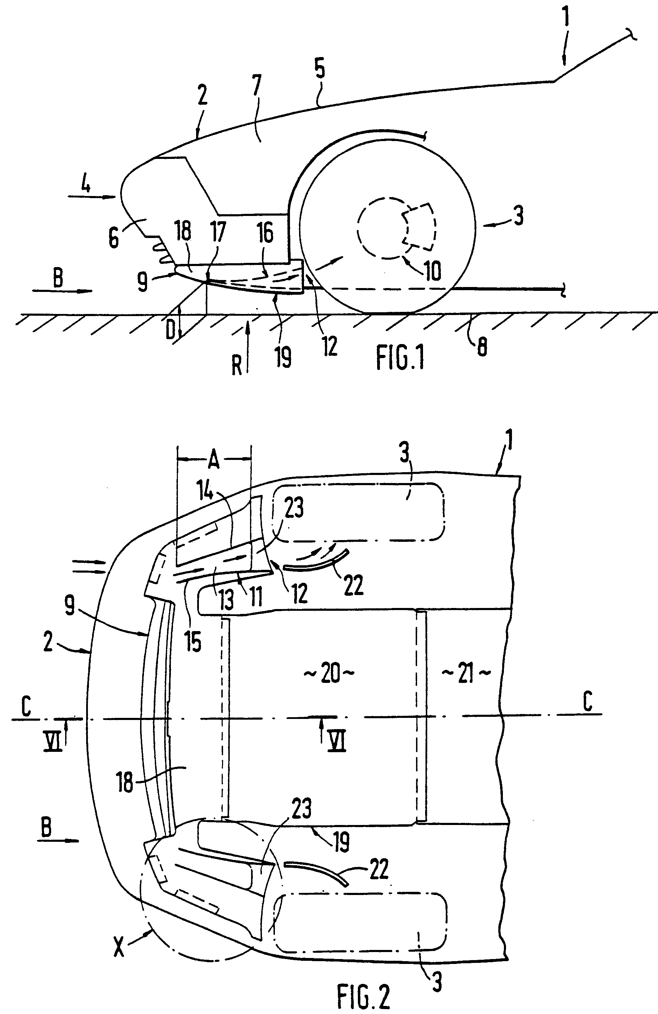

Der in Fig. 1 gezeigte Personenwagen 1 weist einen Aufbau 2 und Räder 3 auf. Der Aufbau 2 umfaßt in einem Bugendbereich 4 eine Motorhaube 5, eine aus elastischem Werkstoff gefertigte Verkleidung 6, Kotflügel 7 und ein benachbart einer Fahrbahn 8 verlaufendes Bugendteil 9.

Zur Kühlung der an jedem Rad 3 angeordneten Bremse 10 sind am Bugendteil 9 zwei mit Abstand zu einer Fahrzeugmittellängsebene C-C verlaufende Luftleitkanäle 11 vorgesehen, deren freie Enden 12 mittelbar oder unmittelbar auf die Bremsen 10 gerichtet sind (Fig. 2).

Erfindungsgemäß sind die Luftleitkanäle 11 einstückig mit dem Bugteil 9 ausgebildet, wobei jeder Luftleitkanal 11 zumindest über einen Teilbereich A seiner Längserstreckung durch eine zur Fahrbahn 8 hin offene Rinne 13 des Bugteils 9 dargestellt ist. Gemäß Fig. 5 weist die Rinne 13 einen etwa U-förmig profilierten Querschnitt auf, der sich in Strömungsrichtung B der Kühlluft erweitert.

Die Rinne 13 wird durch zwei aufrecht verlaufende, seitliche Stege 14, 15 und eine obere Begrenzungswand 16 festgelegt, die die beiden Stege 14, 15 miteinander verbindet (Fig. 5). Die Stege 14, 15 weisen am hinteren Ende 12 der Rinne 13 ihre größte Höhe auf und laufen - in Fahrtrichtung gesehen - keilförmig aus. In der Draufsicht erweitern sich die beiden Stege 14, 15 zu den Rädern 3 hin trichterförmig (Fig. 2). Die Breite der Rinne 13 richtet sich nach der benötigten Luftmenge und kann empirisch ermittelt werden. Die Luftleitkanäle 11 können entweder parallel zu der Längsmittelebene C-C oder aber winkelig zu dieser verlaufen (Fig. 2).

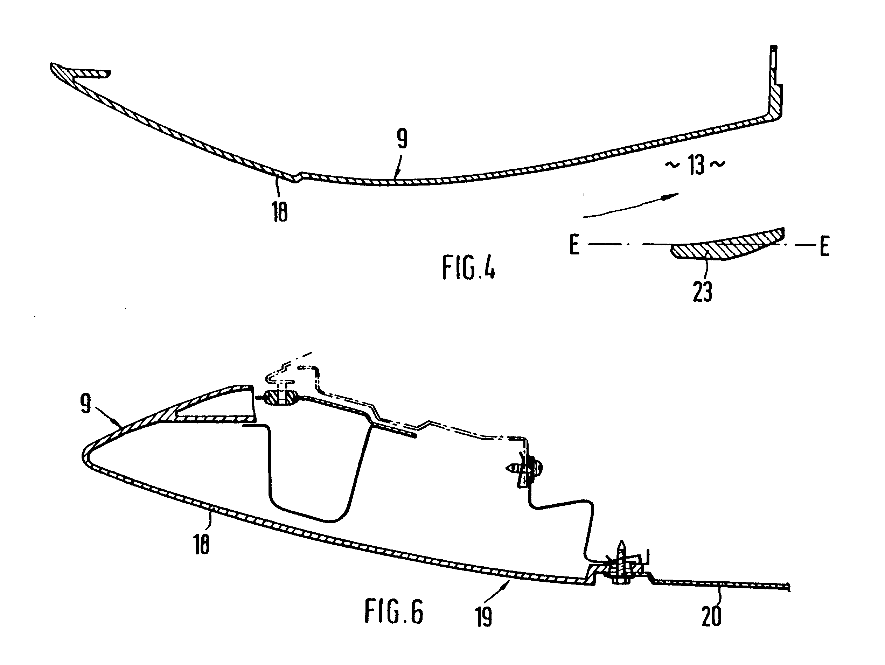

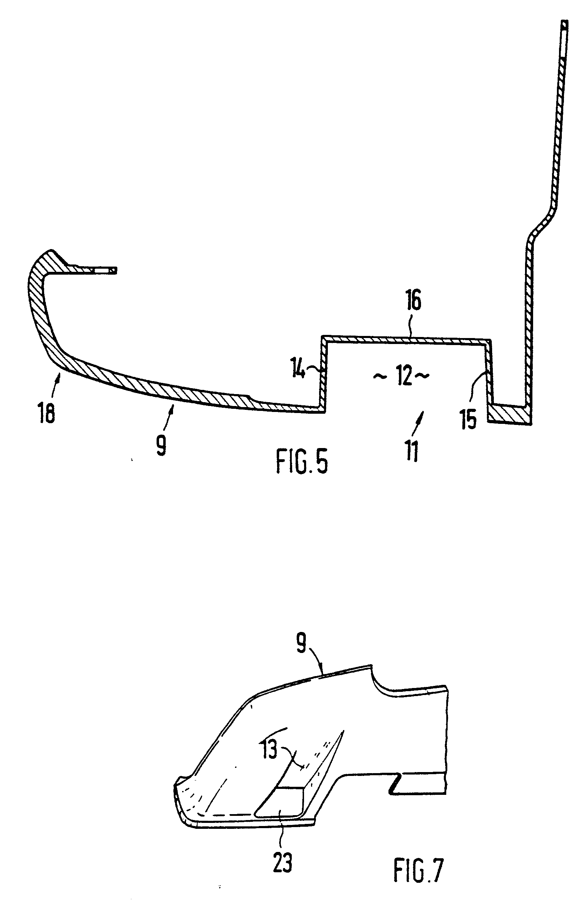

Die obere Begrenzungswand 16 weist im Bereich ihres vorderen Endes 17 ihren geringsten Abstand (Maß D) zur Fahrbahn 8 auf und steigt danach sanft nach hinten an (konvexer Formverlauf zur Fahrbahn 8). Gemäß den Fig. 1 und 2 wird das Bugendteil 9 durch einen Spoiler 18 gebildet, der unterhalb der Verkleidung 6 angeordnet und an dieser mittels nicht näher gezeigter Befestigungselemente in Lage gehalten ist. Im Längsschnitt gesehen, weist die Unterseite des Spoilers 18 einen nach außen gerichteten, konvexen Formverlauf auf. Der Spoiler 18 erstreckt sich über einen wesentlichen Teil der Breite des Fahrzeugs und bildet abschnittsweise eine Unterbodenverkleidung 19. Entsprechend Fig. 6 stellt der Spoiler 18 den vorderen Abschnitt einer mehrteiligen Unterbodenverkleidung 19 dar, die außerdem noch Abschnitte 20, 21 umfaßt. Die beiden hinter dem Spoiler 18 liegenden Abschnitte 20, 21 der Unterbodenverkleidung 19 sind etwa horizontal ausgerichtet.

In Fig. 2 ist hinter dem freien Ende 12 des Luftleitkanals 11 an einem nicht dargestellten Radführungsglied ein schaufelartiges Umlenkelement 22 vorgesehen, durch das die Kühlluft nach dem Durchströmen der Rinne 13 zu den Bremsen 10 hin geleitet wird und diese kühlt. Das Umlenkelement 22 fluchtet etwa mit dem inneren Steg 15 der Rinne 13 (Fig. 2). Die Rinne 13 endet im Bereich des Rades 3. Es besteht aber auch die Möglichkeit, auf ein derartiges Umlenkelement 22 zu verzichten und die Rinne 13 nach hinten hin derart zu verlängern, daß die Bremsen 10 direkt angeströmt werden.

Der Luftleitkanal 11 kann entweder über seine gesamte Längserstreckung zur Fahrbahn 8 hin offen ausgebildet sein (nicht dargestellt) oder aber benachbart seinem hinteren Ende 12 durch einen tragflügelartig profilierten Steg 23 nach unten hin geschlossen sein. Dieser Steg 23 ist zu einer horizontalen Hilfsebene E-E derart angestellt, daß die Kühlluft nach oben hin in Richtung Vorderachse bzw. Bremse 10 umgelenkt wird.

**Patentansprüche**

1. Kraftfahrzeug mit einem benachbart einer Fahrbahn verlaufenden Bugendteil, das mit Luftleitkanälen verbunden ist, die zur Kühlung der Bremsen dienen, dadurch gekennzeichnet, daß die Luftleitkanäle (11) einstückig mit dem Bugendteil (9) abgebildet sind und daß jeder Luftleitkanal (11) zumindest über einen Teilbereich (Teilbetrag A) seiner Längserstreckung durch eine zur Fahrbahn (8) hin offene Rinne (13) dargestellt ist.

2. Kraftfahrzeug nach Anspruch 1, dadurch gekennzeichnet, daß die Rinne (13) einen etwa U-förmig profilierten Querschnitt aufweist, der sich in Strömungsrichtung (B) der Kühlluft erweitert.

3. Kraftfahrzeug nach Anspruch 1 und 2, dadurch gekennzeichnet, daß sich die Rinne (13) - in der Draufsicht gesehen - zu den Rädern (3) hin trichterförmig erweitert.

4. Kraftfahrzeug nach einem oder mehreren der vorangegangenen Ansprüche, dadurch gekennzeichnet, daß jede Rinne (13) an ihrem in Fahrtrichtung gesehen hintenliegenden Ende (12) durch einen tragflügelartig profilierten Steg (23) nach unten hin geschlossen ist.

5. Kraftfahrzeug nach Anspruch 1, dadurch gekennzeichnet, daß das in Fahrtrichtung gesehen hinten liegende Ende (12) der Rinne (13) an ein Umlenkelement (22) herangeführt ist.

**Claims**

1. Motor vehicle with a front end section running adjacent a roadway, which section is connected with air ducts, which serve to cool the brakes, characterised in that the air ducts (11) are formed in a single piece with the front end section (9) and in that each air duct (11) is represented by a channel (13) open towards the roadway (8), at least over part (portion A) of its length.

2. Motor vehicle according to Claim 1, characterised in that the channel (13) has an approximately U-shaped cross-section which widens in the direction of flow (B) of the cooling air.

3. Motor vehicle according to Claims 1 and 2, characterised in that the channel (13) - seen in plan view - expands in the shape of a funnel towards the wheels (3).

4. Motor vehicle according to one or more of the preceding claims, characterised in that each channel (13) at its end (12) lying at the back, viewed in the direction of travel, is closed towards the bottom by a crosspiece (23) of aerofoil shape.

5. Motor vehicle according to Claim 1, characterised in that the end (12) of the channel (13) lying at the back viewed in the direction of travel, is adjacent a guide member (22).

**Revendications**

1. Véhicule automobile comportant une partie avant placée au voisinage de la chaussée qui est reliée à des conduits d'air servant à refroidir les freins, caractérisé en ce que les conduits d'air (11) sont réalisés d'une seule pièce avec la partie avant (9) et en ce que chaque conduit d'air (11) est constitué tout au moins sur une zone partielle (distance partielle A) de sa longueur, par une goulotte (13) ouverte en direction de la chaussée (8).

2. Véhicule automobile selon la revendication 1, caractérisé en ce que la goulotte (13) présente une section transversale profilée à peu près en U qui s'élargit dans le sens (B) de l'écoulement de l'air de refroidissement.

3. Véhicule automobile selon les revendications 1 et 2, caractérisé en ce que la goulotte (13) vue de dessus, s'élargit en forme de cône en direction des roues (3).

4. Véhicule automobile selon une ou plusieurs des revendications ci-dessus, caractérisé en ce que chaque goulotte (13) est fermée vers le bas à son extrémité arrière (12) vue dans le sens de la marche, par une traverse (23) profilée en aile portante.

5. Véhicule automobile selon la revendication 1, caractérisé en ce que l'extrémité (12) arrière vue dans le sens de la marche de la goulotte (13) est prolongée par un déflecteur (22).

FIG.1

FIG.2

FIG.3

0 224 654

9

18

FIG.4

~ 13 ~

E — · — · — E

23

9

18

FIG.6    19    20

0 224 654

FIG.5

FIG.7